# EUROPEAN PATENT APPLICATION

(11) **EP 4 761 064 A1**
(43) Date of publication of application: **17.06.2026**
(21) Application number: 25223179.0
(22) Date of filing: 12.12.2025
(51) Int. Cl.: H02K 1/14, H02K 1/18

(54) **STATOR CORE**

(30) Priority: 16.12.2024 JP 2024220186
(71) Applicant: TOYOTA JIDOSHA KABUSHIKI KAISHA, Toyota-shi, Aichi 471-8571 (JP)
(72) Inventor: ASAOKA, Hironori, Toyota-shi, Aichi 471-8571 (JP); MATSUMOTO, Takashi, Toyota-shi, Aichi 471-8571 (JP); HOMMA, Seiya, Toyota-shi, Aichi 471-8571 (JP)
(74) Representative: Cabinet Beau de Loménie

(57) **Abstract**

A stator core (10) for a rotary electric machine may include a core portion (20) and a plurality of first fixed portions (21). The core portion (20) may have a cylindrical shape centered on a central axis (CA). The core portion (20) may include a plurality of electromagnetic steel plates stacked in an axial direction parallel to the central axis (CA). The plurality of first fixed portions (21) may be arranged along an outer peripheral surface (20s) of the core portion (20), each of which may include a through hole (21h) parallel to the central axis (CA). Each of the plurality of first fixed portions (21) may be a separate member from the core portion (20) and may be fixed to the outer peripheral surface (20s).

## Description

### CROSS REFERENCE TO RELATED APPLICATIONS

This application claims priority to Japanese Patent Application No. 2024-220186 filed on December 16, 2024. The entire content of the priority application is incorporated herein by reference and to which the person of the art can refer when considering the present disclosure.

### TECHNICAL FIELD

The art disclosed herein relates to a stator core for a rotary electric machine.

### BACKGROUND ART

Japanese Patent Application Publication No. 2007-221853 describes a stator core for a rotary electric machine. The stator core includes a fixed portion protruding radially outward from an outer circumference. The stator core and the fixed portion are configured by electromagnetic steel plates being stacked on each other. That is, the fixed portion is configured integrally with the stator core. The stator core has bolt holes extending therethrough in its axial direction. The stator core can be fixed to a casing by being fastened with bolts through the bolt holes.

### SUMMARY

External force is applied by the bolts on the electromagnetic steel plates constituting the fixed portion. Such external force may cause breakage such as peeling of the electromagnetic steel plate(s) constituting the fixed portion. Since the fixed portion and the stator core are constituted of the electromagnetic steel plates, i.e., the same member, the breakage which occurred in the fixed portion may propagate into the stator core via the electromagnetic steel plates.

A stator core for a rotary electric machine is disclosed herein. The stator core disclosed herein may comprise: a core portion and a plurality of first fixed portions. The core portion has a cylindrical shape centered on a central axis. The core portion comprises a plurality of electromagnetic steel plates stacked in an axial direction parallel to the central axis. The plurality of first fixed portions is arranged along an outer peripheral surface of the core portion, each of which comprises a through hole parallel to the central axis. Each of the plurality of first fixed portions is a separate member from the core portion and is fixed to the outer peripheral surface.

In the above-described configuration, the first fixed portions are configured as separate members from the core portion. Due to this, even when breakage occurs in the first fixed portion(s) due to various types of external forces, the breakage can be suppressed from being propagated into the core portion. The breakage of the electromagnetic steel plates constituting the core portion can be suppressed.

### BRIEF DESCRIPTION OF DRAWINGS

FIG. 1 illustrates a schematic top view of a stator core 10.
FIG. 2 illustrates an enlarged top view of a section II in FIG. 1.
FIG. 3 illustrates a schematic side view as seen along an arrow Y3 in FIG. 1.
FIG. 4 illustrates a schematic cross-sectional view along a line IV-IV in FIG. 1.
FIG. 5 illustrates a schematic top view of a stator core 110 according to a comparative example.
FIG. 6 illustrates a modification of welded portions 22.
FIG. 7 illustrates an enlarged top view of a stator core 210 according to a second embodiment.
FIG. 8 illustrates an enlarged top view of a modification for the second embodiment.
FIG. 9 illustrates an enlarged top view of a stator core 310 according to a third embodiment.
FIG. 10 illustrates an enlarged top view of a stator core 410 according to a fourth embodiment.

### DETAILED DESCRIPTION

In one aspect of the present teachings, each of the plurality of first fixed portions may have a contact surface with the outer peripheral surface of the core portion. A perimeter of the contact surface may include a pair of sides extending in the axial direction. Each of the plurality of first fixed portions may be welded to the outer peripheral surface of the core portion at least at a portion of the pair of sides.

According to the above configuration, each of the plurality of first fixed portions can be surely fixed by welding to the outer peripheral surface of the core portion.

In one aspect of the present teachings, in each of the plurality of first fixed portions, a welded portion may be arranged over an entire length of the pair of sides.

According to the above configuration, in each of the first fixed portions, the first fixed portion can be fixed to the outer peripheral surface over the entire length of the pair of sides.

In one aspect of the present teachings, in each of the plurality of first fixed portions, a plurality of welded portions may be arranged in a staggered pattern on the pair of sides.

According to the above configuration, the total length of the welded portions can be made short while maintaining welding strength. Eddy-current loss due to the welded portions can be suppressed.

In one aspect of the present teachings, the core portion may comprise a plurality of grooves, wherein the plurality of grooves may be defined on the outer peripheral surface and extend in the axial direction. Each of the plurality of first fixed portions may have a protrusion, wherein the protrusion may be arranged on the contact surface with the outer peripheral surface and the protrusion may protrude from the contact surface and extend in the axial direction. The plurality of grooves and the protrusions may be engaged with each other, respectively.

According to the above configuration, an interlocking structure can be formed by the grooves and the protrusions. The attaching strength of the first fixed portions to the core portion can be enhanced.

In one aspect of the present teachings, the core portion may comprise a plurality of base portions arranged on the outer peripheral surface and protruding radially outward from the outer peripheral surface. The plurality of grooves may be defined on the plurality of base portions, respectively.

High stress is applied by the press-fitted protrusions on the base portions in a direction of spreading the grooves. According to the above configuration, by the base portions protruding, the stress can be suppressed from being transferred to the core portion. Increase in the loss can be suppressed.

In one aspect of the present teachings, a circumferential width of each of the plurality of grooves may be larger on a radially inner side than on a radially outer side. A circumferential width of each of the protrusions may be larger on the radially inner side than on the radially outer side.

According to the above configuration, the tapered shape of the grooves and protrusions can constitute an "anchoring" structure. The protrusions can be suppressed from slipping out of the grooves.

In one aspect of the present teachings, the plurality of first fixed portions may be arranged at equal intervals in a circumferential direction centered on the central axis.

In one aspect of the present teachings, the core portion may further comprise a plurality of second fixed portions arranged along the outer peripheral surface of the core portion, wherein each of the plurality of second fixed portions may have a through hole parallel to the central axis. Each of the plurality of second fixed portions may protrude radially outward from the outer peripheral surface and may be integral with the core portion.

According to the above configuration, the total number of fixed portions can be suitably varied by mixing the first fixed portion(s), which are separate from the core portion, and the second fixed portion(s), which are integral with the core portion.

In one aspect of the present teachings, the core portion may comprise a plurality of core blocks arranged along the axial direction. Each of the plurality of core blocks may comprise a plurality of electromagnetic steel plates stacked in the axial direction. Each of the plurality of core blocks may comprise a plurality of crimping portions that crimp the plurality of electromagnetic steel plates to each other, wherein the plurality of crimping portions may be arranged along the circumferential direction centered on the central axis. A distance in the circumferential direction between the first fixed portion and the crimping portion that are adjacent to each other may be greater than a distance in the circumferential direction between the crimping portions adjacent to each other.

According to the above configuration, the same function as the crimping portions can be acquired by the first fixed portion. Due to this, the crimping portions near the first fixed portion may be omitted. Loss caused due to the crimping portions can be mitigated.

### First Embodiment

### (Structure of Stator Core 10)

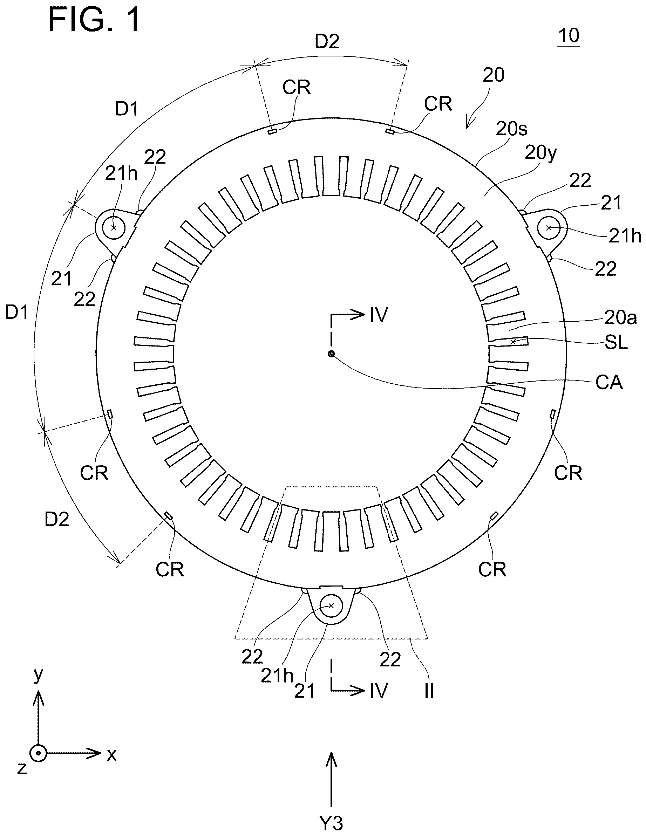

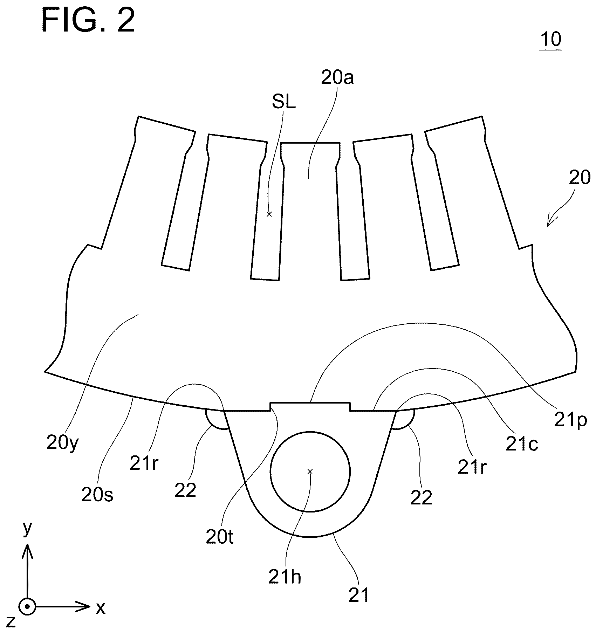

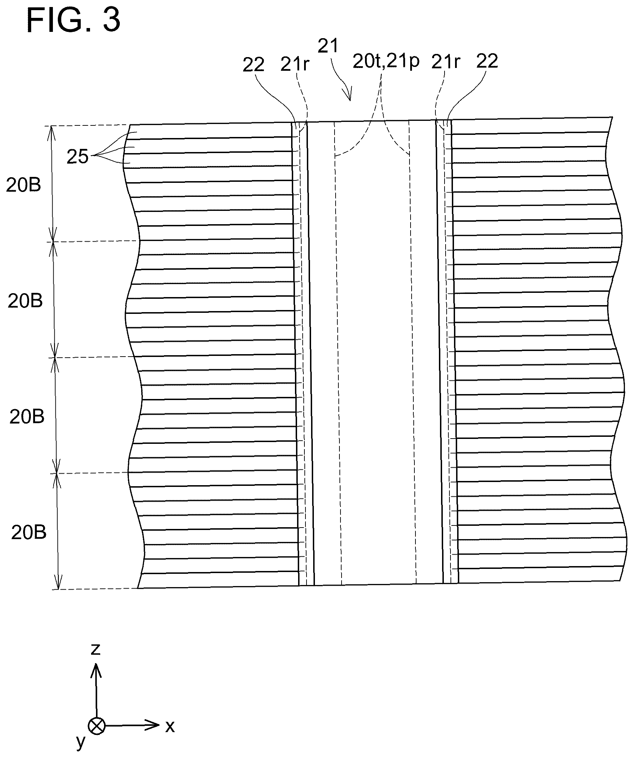

FIG. 1 illustrates a schematic top view of a stator core 10 for a rotary electric machine according to a present embodiment. In FIG. 1, a z direction is a direction along which a central axis CA extends. X and y directions are directions within a plane perpendicular to the central axis CA. The coordinate system is the same throughout the following figures. FIG. 2 illustrates an enlarged top view of a section II in FIG. 1. FIG. 3 illustrates a schematic side view as seen along an arrow Y3 of FIG. 1. Here, for the sake of clear illustration, as to components that are arranged repeatedly, only one of them may be given a reference numeral.

The stator core 10 comprises a core portion 20 and a plurality of first fixed portions 21. The core portion 20 is a member having a cylindrical shape centered on the central axis CA. The core portion 20 comprises a cylindrical back yoke 20y. An inner peripheral surface of the back yoke 20y comprises a plurality of protruding teeth 20a. Slots SL are defined respectively between the adjacent teeth 20a.

As illustrated in FIG. 3, the core portion 20 comprises a plurality of core blocks 20B aligned along an axial direction (z direction) parallel to the central axis CA. Each of the plurality of core blocks 20B comprises a plurality of electromagnetic steel plates 25 stacked along the axial direction.

As illustrated in FIG. 1, each of the plurality of core blocks 20B comprises a plurality of crimping portions CR. The plurality of crimping portions CR is arranged along a circumferential direction centered on the central axis CA. The plurality of crimping portions CR is a part at which the plurality of electromagnetic steel plates 25 constituting the core blocks 20B is crimped to be integrated with each other. A distance in the circumferential direction between the first fixed portion 21 and the crimping portion CR that are next to each other is a distance D1. A distance in the circumferential direction between the crimping portion CR and the crimping portion CR that are next to each other is a distance D2. The distance D1 is greater than the distance D2.

The plurality of first fixed portions 21 is aligned along an outer peripheral surface 20s of the core portion 20. The plurality of first fixed portions 21 is arranged at equal intervals in the circumferential direction centered on the central axis CA. In the example of FIG. 1, three first fixed portions 21 are arranged in rotational symmetry at 120-degree intervals.

Each of the plurality of first fixed portions 21 comprises a through hole 21h parallel to the central axis CA. Each of the plurality of first fixed portions 21 is a separate member from the core portion 20. The plurality of first fixed portions 21 all have a same structure. Accordingly, only one representative first fixed portion 21 may be described in the following description.

As illustrated in FIGS. 2 and 3, the core portion 20 comprises a plurality of grooves 20t defined on the outer peripheral surface 20s. The grooves 20t extend along the axial direction (z direction) of the central axis CA. The first fixed portion 21 comprises a contact surface 21c and a protrusion 21p. The contact surface 21c is a surface that contacts the outer peripheral surface 20s of the core portion 20. The protrusion 21p is disposed on the contact surface 21c. The protrusion 21p protrudes from the contact surface 21c and extends in the axial direction. The protrusion 21p engages with the groove 20t of the core portion 20. Due to this, an interlocking structure makes the first fixed portions 21 and the core portion 20 mechanically joined to each other together.

The contact surface 21c of the first fixed portion 21 comprises a perimeter 21r. The perimeter 21r includes a pair of sides extending in the axial direction, and welded portions 22 are disposed on an entirety of the pair of sides. The welded portions 22 are beads formed between metal parts joined by welding.

### (Attaching Structure of Stator Core 10)

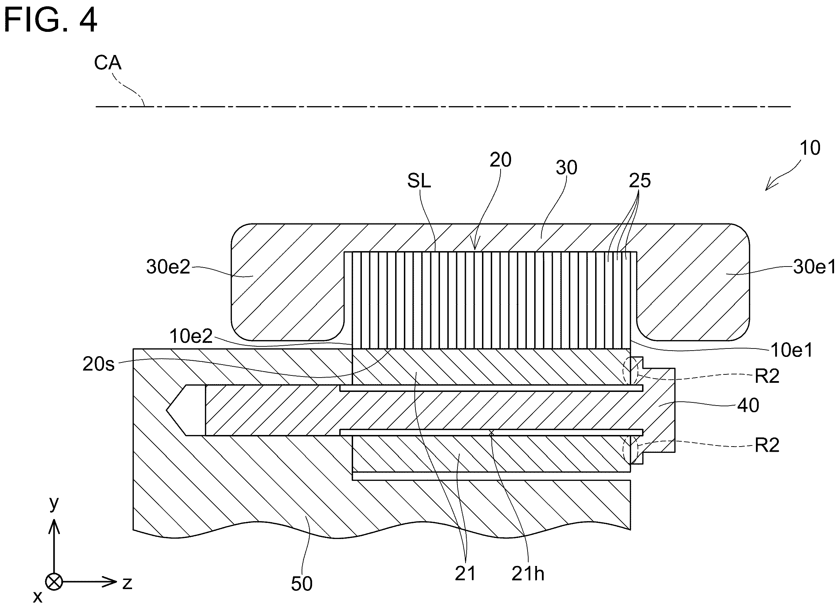

FIG. 4 illustrates a schematic cross-sectional view along a line IV-IV in FIG. 1. FIG. 4 is a cross-sectional view passing through the central axis CA, the slots SL, and the through hole 21h. In FIG. 4, a state where a coil 30 is wrapped around the stator core 10 is illustrated. Also in FIG. 4, a state where the stator core 10 is fixed to a casing 50 with a bolt 40 is illustrated. The stator core 10 has a rotationally symmetric structure relative to the central axis CA. Accordingly, in FIG. 4, only a structure of a portion on a -y direction side relative to the central axis CA is described.

The stator core 10 has a first end surface 10e1 on one end thereof in the axial direction (z direction), and a second end surface 10e2 on another end thereof. Windings constituting the coil 30 are wrapped about the stator core 10. A first coil end 30e1 of the coil 30 protrudes from the first end surface 10e1 in the axial direction. A second coil end 30e2 of the coil 30 protrudes from the second end surface 10e2 in the axial direction.

The first fixed portions 21 are fixed on the outer peripheral surface 20s of the core portion 20. The first fixed portions 21 extend from the first end surface 10e1 to the second end surface 10e2. The through holes 21h extend along the axial direction (z direction) and extend through the first fixed portions 21. The bolts 40 are inserted through the through holes 21h. The stator core 10 is fastened to the casing 50 by the bolts 40.

### (Problem to be Solved)

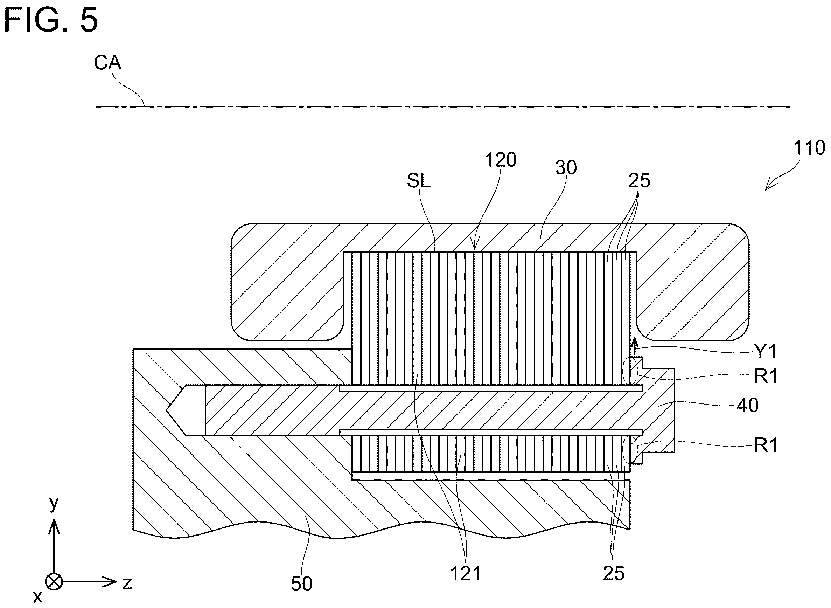

A problem to be solved will be described by using a stator core 110 according to a comparative example of FIG. 5. FIG. 5 illustrates a similar arrangement to that of FIG. 4. In the stator core 110 (FIG. 5) of the comparative example, first fixed portions 121 have a different configuration as compared to the stator core 10 (FIG. 4) of the present embodiment. Specifically, the first fixed portions 121 in the comparative example are constituted of electromagnetic steel plates 25 stacked on each other. That is, in the comparative example (FIG. 5), the first fixed portions 121 are integral with a core portion 120. Contrary to this, in the present embodiment (FIG. 4), the first fixed portions 21 are separate members from the core portion 20.

A motor with great torque and a large output is required for BEV (Battery Electric Vehicle) and large-sized cars. Such motor tends to have an increased stacking thickness of a stator core (thickness in the stacking direction of electromagnetic steel plates). In a structure where the stator core is fixed to the casing 50 by the bolts 40, a bolt axial force is a source for the fixation force. In this structure, there could be an increased risk for a bolt loosening due to a creep caused over time as the stacking thickness of the stator core increases. If the bolt fixation is performed with a high axial force in order to decrease such risk, the electromagnetic steel plate(s) 25 constituting a seating surface of the first fixed portions 121 may be broken (see section R1 in FIG. 5). As an example of the breakage, surface peeling/detachment and/or dented surface of the electromagnetic steel plate(s) 25.

In the comparative example, because the first fixed portions 121 and the core portion 120 are constituted of the same member, i.e., the electromagnetic steel plates 25, a breakage occurred in the first fixed portions 121 may be propagated through the electromagnetic steel plates 25 toward the core portion 120 (see arrow Y1). As a result of this, magnetic characteristics of the back yoke of the core portion 120 may be deteriorated.

### (Effects)

In the stator core 10 (FIG. 4) of the present embodiment, the first fixed portions 21 are separate members from the core portion 20. Due to this, as illustrated in the region R2, even when the seating surface of the first fixed portions may be broken by the bolt axial force, the breakage can be suppressed from being propagated into the core portion 20. Since the electromagnetic steel plates 25 constituting the core portion 20 can be suppressed from being broken, the magnetic characteristics of the back yoke of the core portion 20 can be favorably maintained.

As illustrated in FIG. 2, an interlocking structure is formed by the groove 20t and the protrusion 21p. Due to this, alignment accuracy in attaching the first fixed portions 21 to the core portion 20 can be improved. Further, as compared to when there is no interlocking structure, because the attaching strength of the first fixed portions 21 to the core portion 20 can be enhanced, allowable stress, for example when subjected to irregular torque, can be enhanced.

The electromagnetic steel plates 25 constituting the core portion 20 can be integrated with each other by the first fixed portions 21. That is, the same function as the crimping portions CR can be acquired by the first fixed portions 21. Due to this, the crimping portions CR near the first fixed portions 21 may be omitted. In other words, as illustrated in FIG. 1, the distance D1 between the first fixed portion 21 and the crimping portion CR can be made greater than the distance D2 between the crimping portion CR and the crimping portion CR. Due to this, while the fixation force which integrates the electromagnetic steel plates 25 is maintained, the number of the crimping portions CR can be decreased. The crimping portions CR are a component that interrupts a magnetic path in the back yoke portion of the core portion 20. Because this component can be reduced, loss reduction effect can be obtained. Here, if the fixation force required for the electromagnetic steel plates 25 can be fulfilled solely by the first fixed portions 21, all the crimping portions CR can be omitted.

### (Modifications for First Embodiment)

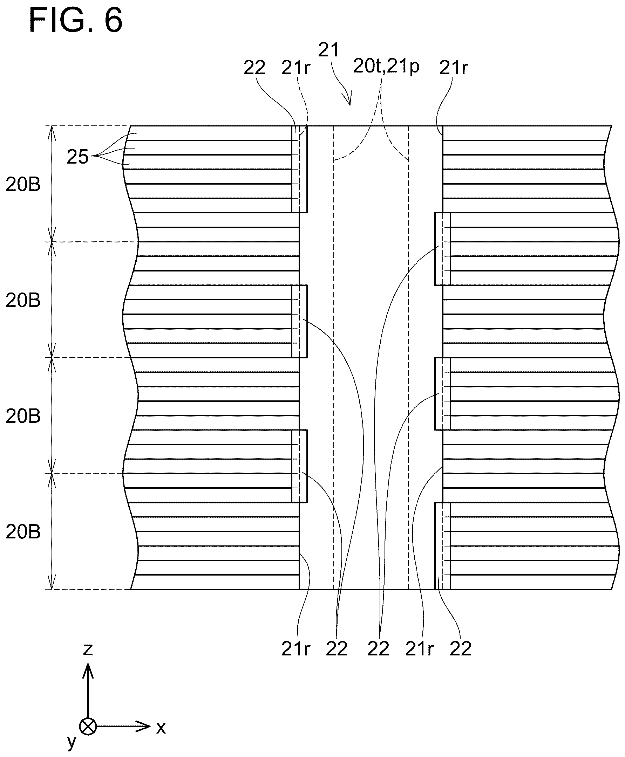

The welded portions 22 may be disposed at least on a portion of the pair of sides of the perimeter 21r extending in the axial direction. Accordingly, the welded portions 22 may comprise various shapes. FIG. 6 illustrates a modification of the welded portions 22. FIG. 6 illustrates a similar arrangement to FIG. 3. In FIG. 6, the welded portions 22 are disposed in a staggered pattern on the pair of sides extending in the axial direction. That is, the welded portions 22 are alternately disposed on the right side and the left side of the pair. In the staggered pattern, if the welded portions 22 on the right side and the welded portions 22 on the left side are summed up, the total becomes equivalent to the welded portions 22 being arranged entirely along the axial direction. Due to this, the total length of the welded portions 22 per one side can be made short. That is, in the staggered pattern, while maintaining welding strength, the total length of the welded portions 22 can be shortened. Since the electromagnetic steel plates, that had been insulated from each other by coating, are electrically connected at the welded portions 2, eddy-current loss may be deteriorated. Then by implementing the staggered pattern, the total length of the welded portions 22 can be made short while maintaining the welding strength, the eddy-current loss can be suppressed.

The interlocking structure by the protrusions 21p and the grooves 20t may be omitted. That is, the first fixed portions 21 can be fixed to the core portion 20 solely by the welded portions 22.

### Second Embodiment

### (Configuration of Base Portions 220b)

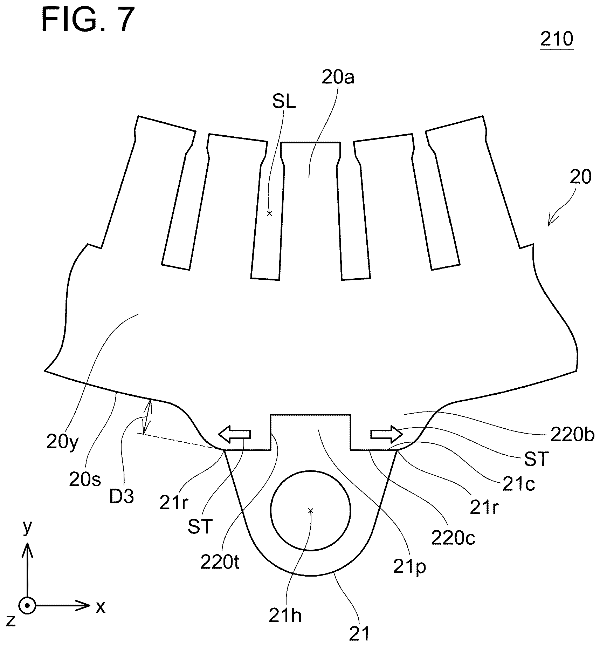

FIG. 7 illustrates an enlarged top view of a stator core 210 according to the second embodiment. FIG. 7 illustrates a similar section to FIG. 2. The second embodiment differs from the first embodiment in that the second embodiment includes base portions 220b. As to features common between the first and second embodiments, descriptions thereof will be omitted by giving the same reference numerals to them. Also, features unique to the second embodiment are denoted 200 to 299 for distinction.

The core portion 20 comprises the base portions 220b configured integral with the core portion 20. Each of the base portions 220b is disposed on the outer peripheral surface 20s and protrudes radially outward from the outer peripheral surface 20s. Each of the base portions 220b comprises a base portion contact surface 220c. The base portion contact surface 220c is a surface that contacts the contact surface 21c of the first fixed portion 21. The base portion contact surface 220c protrudes radially outward from the outer peripheral surface 20s by a distance D3.

A groove 220t is defined in each base portion 220b. The protrusion 21p of the first fixed portion 21 is press-fitted in the groove 220t. Due to this, the first fixed portions 21 and the base portions 220b are mechanically joined by such interlocking structure. Also, no welded portions are provided on the perimeters 21r of the first fixed portions 21. That is, the first fixed portions 21 are fixed to the core portion 20 solely by the press fit method.

### (Effects)

Each of the base portions 220b is subjected to a high stress ST in a direction of spreading the groove 20t, due to the press-fitted protrusion 21p. If the stress ST is transmitted to the back yoke 20y of the core portion 20, magnetic permeability of the back yoke 20y will be lowered due to inverse magnetostriction effect. To address this, in the art of the second embodiment, each of the base portions 220b is made to protrude the distance D3 from the outer peripheral surface 20s radially outward. Due to this, the stress ST can be absorbed by the protruding base portions 220b. That is, the base portions 220b can suppress the stress ST from being transmitted to the core portion 20. Since the decrease in the magnetic characteristics of the back yoke 20y can be suppressed, by which increase in loss can be suppressed.

### (Modification for Second Embodiment)

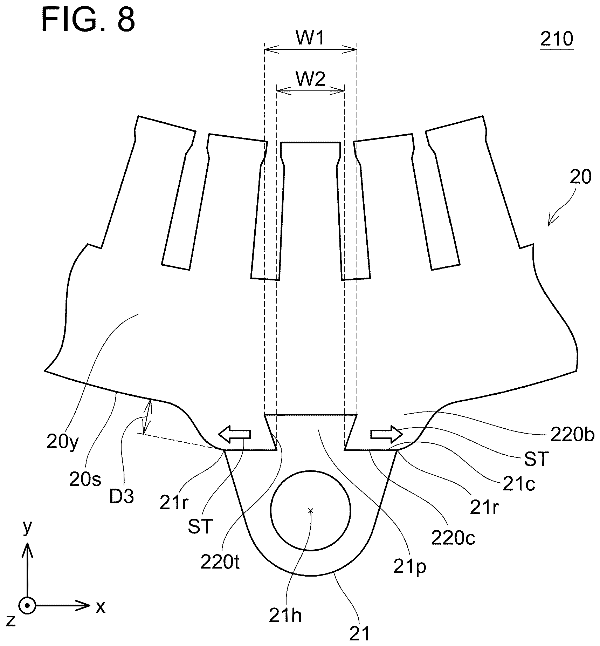

FIG. 8 illustrates a modification of the base portion 220b. FIG. 8 illustrates a section similar to FIG. 7. In the modification of FIG. 8, the groove 220t tapers such that the bottom of the groove is wider than the groove entrance. Specifically, the groove 220t has a width W1 on the radially inner side that is the bottom of the groove. The groove 220t has a width W2 on the radially outer side that is the entrance of the groove. The width W1 is greater than the width W2. The protrusion 21p of the first fixed portion 21 has a shape that conforms to the tapered shape of the groove 220t. Specifically, the protrusion 21p has the width W1 on the radially inner side that is the tip of the protrusion. Also, the protrusion 21p has the width W2 on the radially outer side which is the root of the protrusion.

A so-called "anchoring" structure is realized by a tapered shape formed by the groove 220t and the protrusion 21p. Due to this, the protrusions 21p can be suppressed from slipping out of the grooves 220t. The first fixed portions 21 and the core portion 20 can be fixed to each other more firmly.

In the structure where the first fixed portions 21 are fixed to the core portion 20 by the press-fit method, welded portion(s) may further be disposed.

### Third Embodiment

### (Structure of Stator Core 310)

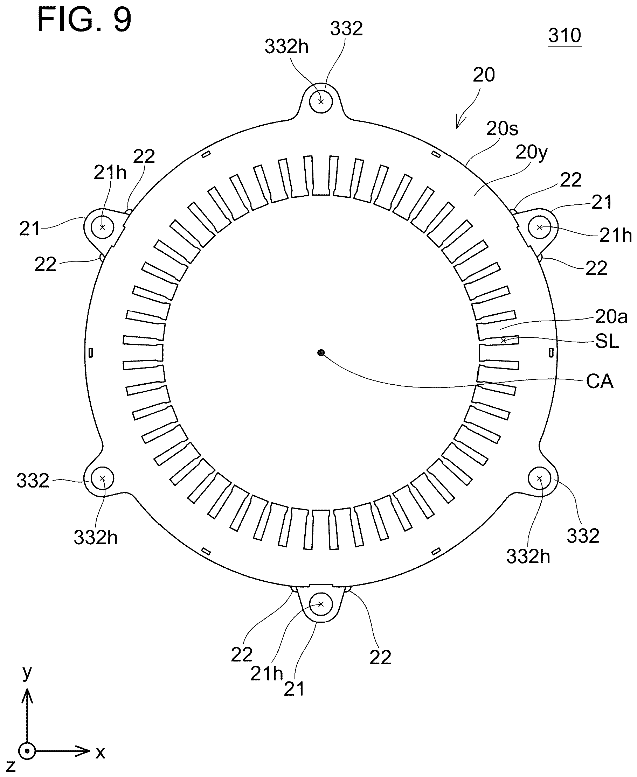

FIG. 9 illustrates an enlarged top view of a stator core 310 according to the third embodiment. FIG. 9 illustrates a similar section to FIG. 1. The third embodiment differs from the first embodiment about how fixed portions are arranged. As to features common between the first and third embodiments, descriptions thereof will be omitted by giving the same reference numerals to them. Also, features unique to the third embodiment are denoted 300 to 399 for distinction.

The stator core 310 of the third embodiment (FIG. 9) has a configuration of the stator core 10 (FIG. 1) of the first embodiment with a plurality of second fixed portions 332 added thereto. The plurality of second fixed portions 332 is aligned along the outer peripheral surface 20s of the core portion 20. The plurality of second fixed portions 332 is disposed at equal intervals along a circumferential direction centered on the central axis CA. In the example of FIG. 9, three second fixed portions 332 are arranged in rotational symmetry at 120-degree intervals. Each of the plurality of second fixed portions 332 comprises a through hole 332h parallel to the central axis CA. The plurality of second fixed portions 332 is configured by the electromagnetic steel plates 25 being stacked on each other. That is, the plurality of second fixed portions 332 is configured integrally with the core portion 20.

### (Effects)

The total number of fixed portions can be suitably varied by mixing the first fixed portions 21, which are separate from the core portion 20, and the second fixed portions 332, which are integral with the core portion 20. That is, the configuration with only the second fixed portions 332 may be used as a basic structure. Then, the first fixed portion(s) 21 may be added according to necessities for improved fixing axial force. As the desired value for the fixing axial force increases, the number of the first fixed portions 21 may be increased. Due to this, the total number of fixed portions can be flexibly changed according to necessities for fixing axial force.

### Fourth Embodiment

### (Structure of Stator Core 410)

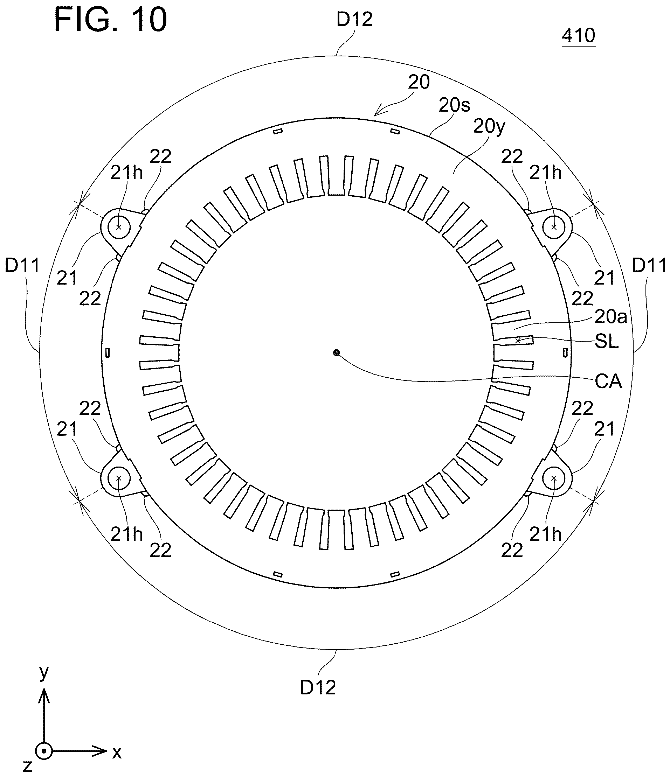

FIG. 10 illustrates an enlarged top view of a stator core 410 according to the fourth embodiment. FIG. 10 illustrates a similar section to FIG. 1. As to features common between the fourth and first embodiments, descriptions thereof will be omitted by giving the same reference numerals to them. Also, features unique to the fourth embodiment are denoted 400 to 499 for distinction.

In the stator core 410 of the fourth embodiment, the plurality of first fixed portions 21 is arranged at irregular intervals in the circumferential direction centered on the central axis CA. That is, two types of distances, i.e., a distance D11 and a distance D12 exist in the distance in the circumferential direction between the adjacent first fixed portions 21.

Because the first fixed portions 21 are separate from the core portion 20, the degree of freedom in attached positions is high. Accordingly, depending on restrictions for installment of the stator core 410, the positions of the first fixed portions 21 can be suitably adjusted. The degree of freedom in attachment of the stator core 410 can be enhanced. Here, the layout of the first fixed portions 21 in FIG. 10 is an example. In actuality, there are various layouts of the first fixed portions 21.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A stator core (10) for a rotary electric machine, the stator core (10) comprising:
a core portion (20) having a cylindrical shape centered on a central axis (CA) and comprising a plurality of electromagnetic steel plates (25) stacked in an axial direction parallel to the central axis (CA); and
a plurality of first fixed portions (21) arranged along an outer peripheral surface (20s) of the core portion (20), each of which comprises a through hole (21h) parallel to the central axis,
wherein each of the plurality of first fixed portions (21) is a separate member from the core portion (20) and is fixed to the outer peripheral surface (20s).

2. The stator core (10) according to claim 1, wherein
each of the plurality of first fixed portions (21) has a contact surface (21c) with the outer peripheral surface (20s) of the core portion (20),
a perimeter (21r) of the contact surface (21c) includes a pair of sides extending in the axial direction, and
each of the plurality of first fixed portions (21) is welded to the outer peripheral surface (20s) of the core portion (20) at least at a portion of the pair of sides.

3. The stator core (10) according to claim 2, wherein
in each of the plurality of first fixed portions (21), a welded portion (22) is arranged over an entire length of the pair of sides.

4. The stator core (10) according to claim 2, wherein
in each of the plurality of first fixed portions (21), a plurality of welded portions (22) is arranged in a staggered pattern on the pair of sides.

5. The stator core (10) according to any one of claims 1 to 4, wherein
the core portion (20) comprises a plurality of grooves (20t), wherein the plurality of grooves (20t) is defined on the outer peripheral surface (20s) and extends in the axial direction,
each of the plurality of first fixed portions (21) has a protrusion (20p), wherein the protrusion (20p) is arranged on the contact surface (21c) with the outer peripheral surface (20s) and the protrusion (20p) protrudes from the contact surface (21c) and extends in the axial direction, and
the plurality of grooves (20t) and the protrusions (20p) are engaged with each other, respectively.

6. The stator core (210) according to claim 5, wherein
the core portion (20) comprises a plurality of base portions (220t) arranged on the outer peripheral surface (20s) and protruding radially outward from the outer peripheral surface (20s), and
the plurality of grooves (20t) is defined on the plurality of base portions (220t), respectively.

7. The stator core (10, 210) according to claim 5 or 6, wherein
a circumferential width of each of the plurality of grooves (20t) is larger on a radially inner side than on a radially outer side, and
a circumferential width of each of the protrusions (20p) is larger on the radially inner side than on the radially outer side.

8. The stator core (10) according to any one of claims 1 to 7, wherein
the plurality of first fixed portions (21) is arranged at equal intervals in a circumferential direction centered on the central axis (CA).

9. The stator core (310) according to any one of claims 1 to 8, wherein
the core portion (20) further comprises a plurality of second fixed portions (332) arranged along the outer peripheral surface (20s) of the core portion, wherein each of the plurality of second fixed portions (332) has a through hole (332h) parallel to the central axis (CA), and
each of the plurality of second fixed portions (332) protrudes radially outward from the outer peripheral surface (20s) and is integral with the core portion (20).

10. The stator core (10) according to any one of claims 1 to 9, wherein
the core portion (20) comprises a plurality of core blocks (20B) arranged along the axial direction,
each of the plurality of core blocks (20B) comprises a plurality of electromagnetic steel plates (25) stacked in the axial direction,
each of the plurality of core blocks (20B) comprises a plurality of crimping portions (CR) that crimp the plurality of electromagnetic steel plates (25) to each other, wherein the plurality of crimping portions (CR) is arranged along the circumferential direction centered on the central axis (CA), and
a distance in the circumferential direction between the first fixed portion (21) and the crimping portion (CR) that are adjacent to each other is greater than a distance in the circumferential direction between the crimping portions (CR) adjacent to each other.
